**Europäisches Patentamt**

**European Patent Office**

**Office européen des brevets**

(19)

(11) Veröffentlichungsnummer: **0 300 241 B1**

# (12) EUROPÄISCHE PATENTSCHRIFT

(45) Veröffentlichungstag der Patentschrift:
25.09.91 Patentblatt 91/39

(51) Int. Cl.⁵: **B29B 7/82**

(21) Anmeldenummer: 88110423.6

(22) Anmeldetag: 29.06.88

(54) **Verfahren zur Herstellung und zur Verarbeitung von Reaktionskunststoff-Mischungen.**

(30) Priorität: 10.07.87 DE 3722897
17.10.87 DE 3735283
19.10.87 DE 3735360
04.11.87 DE 3737413

(43) Veröffentlichungstag der Anmeldung:
25.01.89 Patentblatt 89/04

(45) Bekanntmachung des Hinweises auf die
Patenterteilung:
25.09.91 Patentblatt 91/39

(84) Benannte Vertragsstaaten:
AT BE CH DE ES FR GB GR IT LI NL SE

(56) Entgegenhaltungen:
EP-A- 0 117 708
FR-A- 2 418 067
US-A- 3 151 095

(73) Patentinhaber: Zeiss, Karl Reinhard
Feldbergstrasse 24G
W-7800 Freiburg (DE)
Patentinhaber: Degen, Paul
Butzengrabenweg 21
W-7582 Bühlertal (DE)

(72) Erfinder: Zeiss, Karl Reinhard
Feldbergstrasse 24G
W-7800 Freiburg (DE)
Erfinder: Degen, Paul
Butzengrabenweg 21
W-7582 Bühlertal (DE)

(74) Vertreter: Roesner, Werner
Geierfeld 45
W-6232 Bad Soden-Altenhain (DE)

## Beschreibung

Die Erfindung betrifft ein Verfahren nach dem Oberbegriff des Anspruches 1.

Es ist aus EP 117708 — A3 bekannt, Füllstoffe in gekühltes flüssiges Kunstharz einzumischen, wobei die Füllstoffpartikel auf ihrer gesamten Oberfläche mit Kunstharz benetzt und eingehüllt und auch die Hohlräume zwischen den Füllstoffpartikeln mit Kunstharz ausgefüllt werden. Deshalb ist die notwendige Menge an flüssigem Kunstharz verhältnismäßig groß.

Ausgehend von dem genannten Stand der Technik liegt der Erfindung die Aufgabe zugrunde, ein Verfahren zum Herstellen eines porösen Körpers, insbesondere eines Baukörpers, eines Bauelements oder einer Schicht aus Reaktionskunststoff- und Füllstoffpartikeln in im wesentlichen homogener Verteilung zu schaffen, der je nach den gewählten Füllstoffen die gewünschten Eigenschaften und zusätzlich sehr gute Festigkeitswerte aufweist, aber nur eine minimale Menge Reaktionskunststoff als Bindemittel enthält.

Vorstehende Aufgabe wird erfindungsgemäß durch den kennzeichnenden Teil des Anspruches 1 gelöst.

Die Erfindung macht sich die Erkenntnis zunutze, daß die Füllstoffpartikel nur dort mit Reaktionskunststoffpartikeln benetzt zu werden brauchen, wo sie benachbarte Füllstoffpartikel berühren. Hierfür kommt man mit einer minimalen Menge Reaktionskunststoff aus. Die Besonderheit des neuen Verfahrens besteht darin, daß die gekühlten Reaktionskunststoffpartikel weniger als 5% (1/20) des Füllstoffvolumens ausmachen. Vorzugsweise beträgt das Reaktionskunststoffvolumen nur maximal 3% (1/33) oder sogar weniger als 1,5% (1/66).

In diesem Fall sind die Kunststoffbrücken zwischen den Füllstoffpartikeln nur sehr kurz, so daß sich z.B. im Falle sehr harter mineralischer Füllstoffe bei Druckbelastung die harten Partikeln praktisch unmittelbar aneinander abstützen. Diese Ausführung ist wegen des geringen Kunststoffanteils auch schwer entflammbar.

Bei weiteren bevorzugten Ausführungsvarianten ist vorgesehen, daß die Füllstoffpartikel wenigstens teilweise Fasern sind, insbesondere solche, die sich zur Aufnahme von Zugkräften eignen. In dieselbe Richtung zielt der weitere Vorschlag, daß die Füllstoffpartikel über Kunststoffbrücken mit einer Armierung verbunden sind.

Das erfindungsgemäße Verfahren ist nicht auf bewegliche Körper beschränkt, sondern kann auch die Form eines Boden- oder Wandbelags haben, der z.B. fest mit einem Straßenuntergrund, einem Eisenbahn-Schienenbett oder einem Gebäude verbunden ist. Hierbei kann im Einzelfall die Durchlässigkeit für Wasser zu Dränagezwecken oder die Atmungsaktivität der durchgehenden Porosität von besonderem Vorteil sein. Selbstverständlich besteht auch die Möglichkeit, die äußeren Öffnungen der Poren dicht abzuschließen, falls dies im Einzelfall erwünscht ist.

In nochmals einer weiteren bevorzugten praktischen Ausführungsform sind die Füllstoffpartikel wenigstens teilweise Samenkörner und/oder Pflanzennährstoffe. Solche Körper eignen sich besonders gut zur Begrünung von Bauwerken.

Der Anteil des Reaktionskunststoffes im Verhältnis zum Füllstoff kann in einfacher Weise dadurch klein gehalten werden, daß in bevorzugter Ausführung des neuen Verfahrens die gekühlten Kunstharzpartikel mit Durchmessern erzeugt werden, die höchstens etwa ein Zehntel der größten Ausdehnung der Füllstoffpartikel betragen.

Das vorgeschlagene Verfahren kann besonders wirtschaftlich ausgeführt werden, wenn nur die geringe Menge Reaktionskunststoff, nicht auch der Füllstoff, gekühlt wird. Mischt man die gekühlten Reaktionskunststoffpartikel mit der sehr viel größeren Masse des Füllstoffs, so kann es unter ungünstigen Umständen im Einzelfall geschehen, daß die Reaktionskunststoffpartikel zu schnell erwärmt werden und es nicht mehr zu der angestrebten homogenen Vermischung kommt. Um dem vorzubeugen, wird in weiterer bevorzugter Ausgestaltung der Erfindung vorgeschlagen, daß gekühlte Reaktionskunststoffpartikel durch Behandlung mit Wasser oder Wasserdampf mit einer Eisschicht überzogen werden. Sie verzögert die Erwärmung bis zum Erreichen einer gleichmäßigen Vermischung und hat den weiteren positiven Effekt, daß das beim Auftauen gebildete Wasser die Tendenz des sich bei der Erwärmung wieder verflüssigenden Reaktionskunststoffes unterstützt, sich infolge der Kapilarwirkung innerhalb der Hohlräume zwischen den Füllstoffpartikeln in die Ritzen und Engstellen hinein, also gerade zu den Berührungsstellen der Füllstoffpartikel hinzuziehen.

Um besonders hohe Festigkeitswerte zu erzielen, kann in weiterer bevorzugter Ausgestaltung der Erfindung die Mischung aus Reaktionskunststoff und Füllstoff während des Aushärtens unter Druck gesetzt und dadurch verdichtet werden. Je nach der Elastizität des Füllstoffs und des Reaktionskunststoffs kann dabei auch eine innere Vorspannung erzeugt werden, der man eine bestimmte Richtung geben kann. Zur Beschleunigung des Aushärtens des Reaktionskunststoffes kann die Mischung mit dem Füllstoff auch über die Umgebungstemperatur hinaus erwärmt werden. Insbesondere bei porösen Körpern, die in Formen produziert werden, können, wie bei einem Sintervorgang, Druck und Wärme gleichzeitig angewendet werden.

Die nach dem neuen Verfahren hergestellten Körper mit extrem hohem Füllstoff- und extrem niedrigem Reaktions- kunststoffanteil können vielfältige Anwendung finden. Nur beispielhaft seien hier amtungsaktive, schallabsorbierende, feuersichere und wärmeisolierende Bauteile und Beläge erwähnt. Weitere Anwendungen waren bereits oben genannt worden. Dabei sind die Füllstoffe jeweils zweckentsprechend auszuwählen. In Frage kommen in erster Linie preiswerte mineralische Füllstoffe, wie z.B. Sand, organische Füllstoffe, wie z.B. Sägemehl oder Sägespäne, faserige Füllstoffe, enthaltend z.B. Glasfasern, sowie auch Metallspäne.

Zur weiteren Erläuterung der Erfindung wird nachstehend auf die Zeichnung Bezug genommen. Darin zeigen :

Fig. 1    eine schematische Darstellung von in herkömmlicher Weise in einem Kunstharz-Bindemittel eingebetteten Füllstoffpartikeln ;

Fig. 2    eine schematische Darstellung einer homogenen Mischung von Füllstoffpartikeln und gekühlten
         Reaktionskunststoffpartikeln eines in seiner Reaktion blockierten Mehrkomponenten-Reaktionskunststoffes ;

Fig. 3    eine schematische Darstellung eines porösen Körpers, dessen Füllstoffpartikel nur über einzelne
         Kunststoffbrücken im Bereich der Berührungsstellen mit den benachbarten Füllstoffpartikeln verbunden sind ;

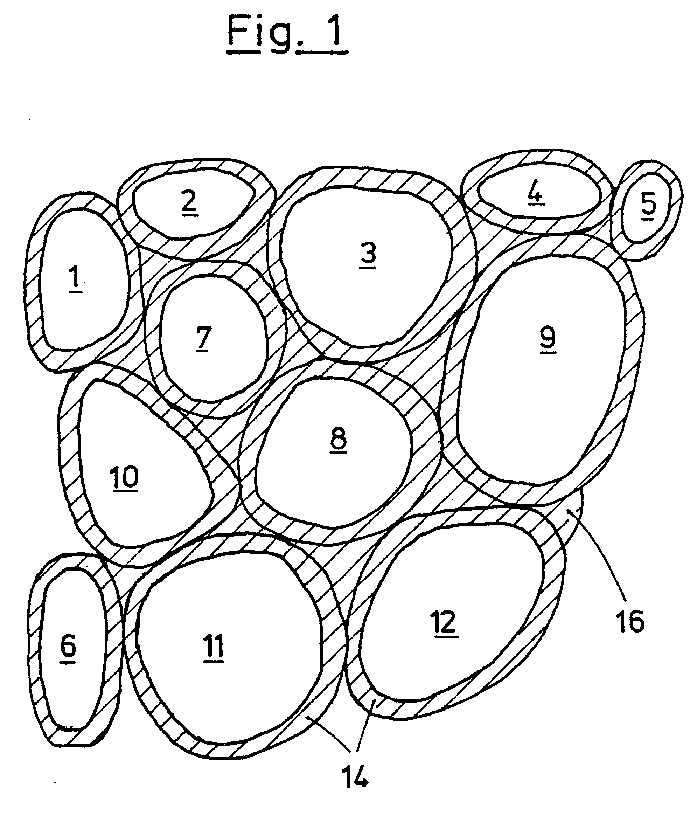

Wie in Fig. 1 schematisch dargestellt, werden beim Mischen von flüssigem Kunstharz-Binder mit Füllstoff die mit 1 bis 12 bezeichneten Füllstoffpartikel auf ihrer gesamten Oberfläche vom flüssigen Kunstharz benetzt und mit einer Hülle 14 überzogen. Auch die mit 16 bezeichneten Zwischenraume zwischen den Füllstoffpartikeln sind mit Kunstharz angefüllt. Geht man in einer Beispielrechnung davon aus, daß die Füllstoffpartikel 1 bis 12 kugelförmig sind und einen Durchmesser von 0,5 mm haben, so gehen etwa $8 \times 10^6$ Partikel in ein Liter-Volumen, wobei die Summe der Volumina der Partikel selbst nur etwa einen halben Liter ausmacht. Rund die Hälfte des Raumes wird also bei einem Körper nach der schematischen Darstellung in Fig. 1 vom zunächst flüssigen, dann erhärteten Kunstharz-Binder eingenommen, wobei auf die Umhüllungen 14 etwa 30% und auf die Zwischenräume 16 20% entfallen.

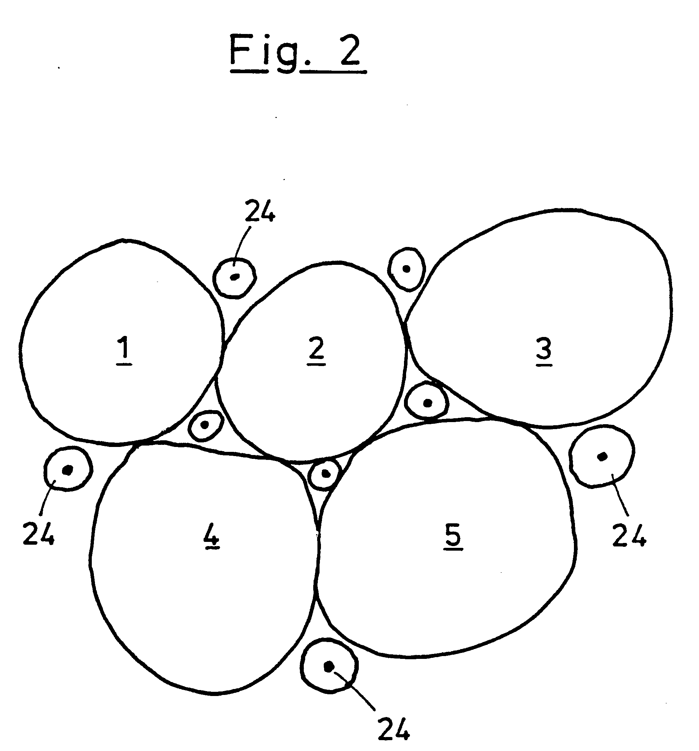

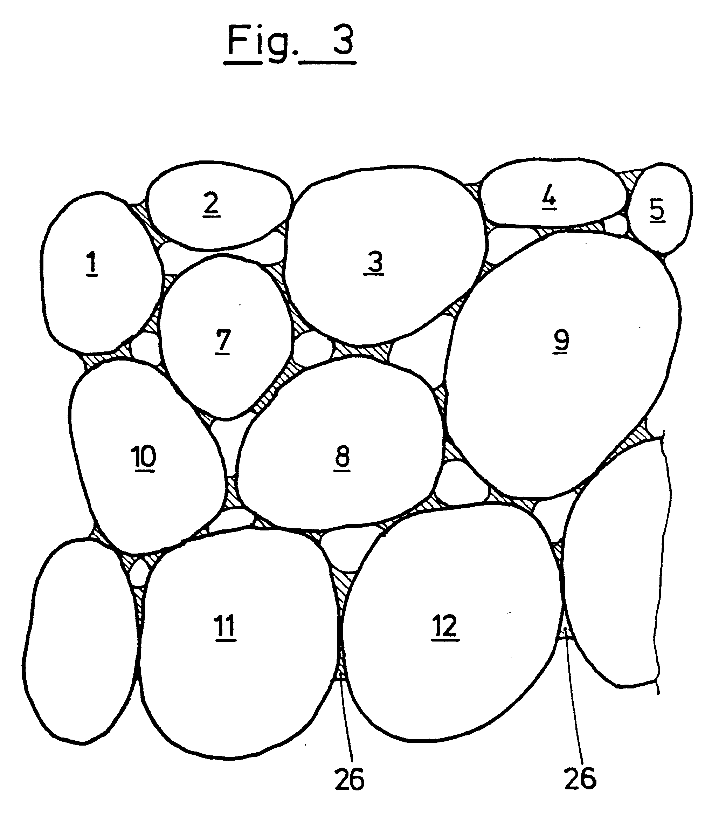

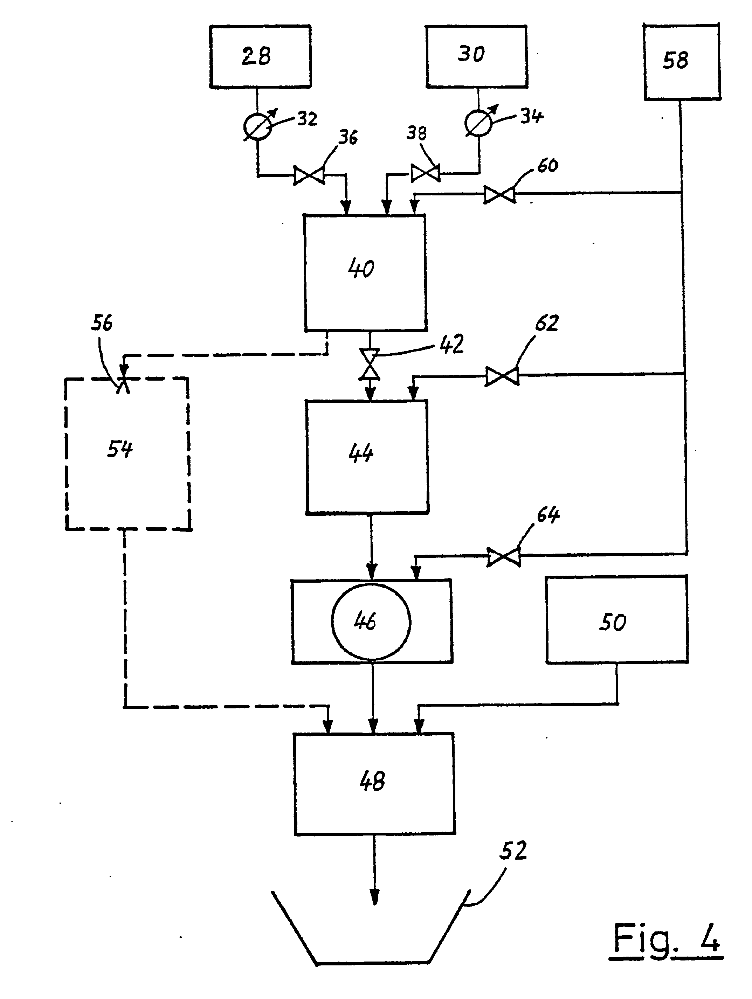

Fig. 2 zeigt demgegenüber eine Mischung von Füllstoffpartikeln 1 bis 5 mit gekühlten, in ihrer Reaktion geblockten Kunststoffpartikeln 24, die wesentlich kleiner sind als die Füllstoffpartikel 1-5. Wenn letztere beispielweise einen Durchmesser von 0,5 mm haben, kann der Durchmesser der Reaktionskunststoffpartikel 24 z.B. etwa 0,01 mm betragen. Erfindungsgemäß macht das Gesamtvolumen der Kunstharzpartikel 24 nur etwa 1%-5% des Volumens der Füllstoffpartikel 18 bis 22 aus. Darüber hinaus sind die Reaktionskunststoffpartikel 24 im Ausgangszustand beim Mischen auch noch mit einer Eishülle umgeben. Im gemischten Zustand befinden sich die Reaktionskunststoffpartikel 24 gemäß Fig. 2 in den Zwischenräumen zwischen den grösseren Füllstoffpartikeln 1 bis 5. Bei Erwärmung und Verflüssigung des Eises und der Reaktionskunststoffpartikel 24 zieht sich dann die Flüssigkeit infolge Kapillarwirkung in die sich verengenden Spalte zu den Berührungsstellen zwischen den Füllstoffpartikeln 1 bis 12, so daß im Querschnitt der Zustand nach Fig. 3 entsteht. Danach hat sich der verflüssigte Reaktionskunststoff an den Berührungsstellen der Füllstoffpartikel 1 bis 12 konzentriert und dort Kunstharzbrücken 26 gebildet. Es hat sich überraschend herausgestellt, daß die Festigkeit dieses Verbunds über die schmalen Kunstharzbrücken 26 fast genauso hoch ist wie bei vollständig vom Kunstharz umschlossenen Füllstoffpartikeln. Der Vorteil der Bindung nach Fig. 3 besteht demgegenüber darin, daß wegen der freibleibenden Zwischenräume zwischen den Füllstoffpartikeln der sonst zur mehr oder weniger nutzlosen Ausfüllung dieser Hohlräume verwendete Reaktionskunststoff eingespart werden kann und je nach Füllstoff Produkte mit neuen Eigenschaften erhalten werden. Bei Verwendung mineralischer Füllstoffe, wie z.B. Sand und dergleichen, können hochbelastbare leichte Tragelemente oder atmungsaktive Platten und Beläge gewonnen werden. Wegen des minimalen Reaktionskunststoffanteils ist das Material nicht oder nur schwer entflammbar. Die unregelmäßigen äußeren und inneren Poren und Hohlräume bewirken eine gute Schalldämmung und Wärmeisolation. Für diese und andere Zwecke eignen sich aber auch erfindungsgemäß hergestellte Platten und Beläge mit organischen Füllstoffpartikeln, z.B. solchen aus Holz.

Die aus Fig. 3 ersichtliche, größtmögliche durchgehende Porosität bei gleichzeitig unmittelbarer Abstützung der harten Füllstoffpartikel aneinander bzw. sehr kurzen Reaktionskunstharzbrücken läßt das Material auch für Dränagezwecke besonders geeignet erscheinen, selbst wenn dabei hohe Belastungen aufzunehmen sind. So kann einerseits z.B. Regen schnell abfließen, andererseits können eingelagerte Pflanzen mit ihren Wurzeln darin Halt finden und von unten angesaugtes Wasser aufnehmen. Aus einem Material nach Fig. 3 hergestellte Rohre, durch die Wasser geleitet wird, lassen sich nicht nur zur Dränage, sondern auch zur Bewässerung verwenden. Grundsätzlich läßt sich feststellen, daß das neue Material ebenso wie andere im Baubereich verwendete Massen als Belag oder Schicht auf Boden, Wand oder Decke aufzutragen ist, als Vergußmasse in Hohlräume eingefüllt oder eingepreßt werden kann oder mittels Formen daraus beliebig gestaltete Körper hergestellt werden können. Normalerweise wird man dabei etwa nur ein Zehntel der Menge an Reaktionskunststoff brauchen, wie bei herkömmlichen Materialien, bei denen die Füllstoffe in flüssigen Reaktionskunststoff eingemischt werden.

Es versteht sich, daß das neue Verfahren nicht darauf beschränkt ist, daß die gekühlten Reaktionskunststoffpartikel unmittelbar anschließend an ihre Herstellung mit dem vorgesehenen Füllstoff gemischt und zu dem gewünschten porösen Körper weiterverarbeitet werden. Es besteht auch die Möglichkeit, die Reaktionskunststoffpartikel gekühlt zu lagern und zu einem beliebigen späteren Zeitpunkt mit den Füllstoffpartikeln zu mischen. Wenn auch die letzteren gekühlt werden, was insbesondere für kleine Packungsgrößen in Frage kommt, können Reaktionskunststoff- und Füllstoffpartikel im gekühlten Zustand gemischt und bis zur Anwendung gekühlt gelagert werden. Die Mischung kann auch nachträglich erfolgen. So kann z.B. gekühltes Epoxydharzgranulat oder das Granulat eines anderen geeigneten Reaktionskunststoffs auf den Schotter eines Eisenbahn-Schienenbettes gestreut werden. Das Granulat rieselt in die Zwischenräume zwischen den Schottersteinen, taut auf und verklebt die Schottersteine.

## Patentansprüche

1. Verfahren zum Herstellen eines Produktes wie ein Körper oder eine Schicht, bestehend aus mindestens einem Reaktionskunststoff (24) und mindestens einem Füllstoff (1 bis 12), gekennzeichnet durch folgende Schritte,

— Erzeugen kleiner reaktiver Reaktionskunststoffpartikel (24) mit einer Temperatur unterhalb der Reaktionstemperatur,

— Mischen der Reaktionskunststoffpartikel (24) mit Partikeln mindestens eines Füllstoffes (1 bis 12), wobei das Volumen der einzelnen Reaktionskunststoffpartikel (24) höchstens ein Zwanzigstel des Volumens der einzelnen Füllstoffpartikel (1 bis 12) beträgt und das Gesamtvolumen der Reaktionskunststoffpartikel (24) 1-5% des Gesamtvolumens der Füllstoffpartikel (1 bis 12),

— Erwärmung der Reaktionskunststoffpartikel (24) auf mindestens Reaktionstemperatur zur Bildung eines Produktes mit unausgefüllten Spalten in den Hohlräumen zwischen den Füllstoffpartikeln (1 bis 12), wobei die Reaktionskunststoffpartikel (24) Brücken (26) zwischen einzelnen Punkten oder Oberflächenteilen aneinanderstoßender Füllstoffpartikel (1 bis 12) bilden.

2. Verfahren nach Anspruch 1, **dadurch gekennzeichnet**, daß die Reaktionskunststoffpartikel (24) und die Füllstoffpartikel (1 bis 12) in einem Volumenverhältnis von höchstens etwa 1 : 33 gemischt werden.

3. Verfahren nach Anspruch 1, **dadurch gekennzeichnet**, daß die Reaktionskunststoffpartikel (24) und die Füllstoffpartikel (1 bis 12) in einem Volumenverhältnis von höchstens etwa 1 : 66 gemischt werden.

4. Verfahren nach einem der Ansprüche 1 bis 3, **dadurch gekennzeichnet**, daß die gekühlten Reaktionskunststoffpartikel (24) mit Durchmessern erzeugt werden, die höchstens etwa ein Zehntel der größten Ausdehnung der Füllstoffpartikel (1 bis 12) betragen.

5. Verfahren nach einem der Ansprüche 1 bis 4, **dadurch gekennzeichnet**, daß die gekühlten Reaktionskunststoffpartikel (24) durch Behandlung mit Wasser oder Wasserdampf mit einer Eisschicht überzogen werden.

6. Verfahren nach einem der Ansprüche 1 bis 5, **dadurch gekennzeichnet**, daß die Kunststoffbrücken (26) aus geschäumtem Kunststoff bestehen.

7. Verfahren nach einem der Ansprüche 1 bis 6, **dadurch gekennzeichnet**, daß die Kunststoffbrücken (26) aus Mehrkomponenten-Reaktionskunststoffen bestehen.

8. Verfahren nach einem der Ansprüche 1 bis 7, **dadurch gekennzeichnet**, daß die Füllstoffpartikel (1 bis 12) über Kunststoffbrücken (26) mit einer Armierung verbunden sind.

9. Verfahren nach einem der Ansprüche 1 bis 8, **dadurch gekennzeichnet**, daß die Füllstoffpartikel (1 bis 12) wenigstens teilweise Fasern sind.

10. Verfahren nach einem der Ansprüche 1 bis 9, **dadurch gekennzeichnet**, daß die Füllstoffpartikel (1 bis 12) über Kunststoffbrücken (26) mit einem angrenzenden Körper, beispielsweise einer Gebäudewand oder Straßenoberfläche, verbunden sind.

11. Verfahren nach einem der Ansprüche 1 bis 10, **dadurch gekennzeichnet**, daß die Füllstoffpartikel (1 bis 12) wenigstens teilweise Samenkörner und/oder Pflanzennährstoffe sind.

12. Verfahren nach einem der Ansprüche 1 bis 11, **dadurch gekennzeichnet**, daß die Mischung aus Reaktionskunststoffpartikeln (24) und Füllstoffpartikeln (1 bis 12) während des Ausreagierens unter Druck gesetzt wird.

13. Verfahren nach Anspruch 1, **dadurch gekennzeichnet**, daß die reaktiven Reaktionskunststoffpartikel (24) durch einen Kälteschock mittels eines tiefkalten Flüssiggases granuliert oder pulverisiert werden.

14. Verfahren nach Anspruch 1, **dadurch gekennzeichnet**, daß gekühlte, körnige Reaktionskunststoffpartikel (24) oder Reaktionskunststoffpartikelmischungen mit solchen Reaktionskunststoffen gemischt werden, die

EP 0 300 241 B1

sich im flüssigen Zustand nicht beimischen lassen.


## Claims

1. Process for the production of a product such as an article or a layer comprising at least one reaction-curable polymer (24) and at least one filler (1 to 12), characterised by the following steps :
— formation of small reactive reaction-curable polymer particles (24) having a temperature below the reaction temperature,
— mixing the reaction-curable polymer particles (24) with particles of at least one filler (1 to 12), the volume of the individual reaction-curable polymer particles (24) being at most one twentieth of the volume of the individual filler particles (1 to 12) and the total volume of the reaction-curable polymer particles (24) being 1-5% of the total volume of the filler particles (1 to 12),
— warming the reaction-curable polymer particles (24) to at least the reaction temperature in order to form a product having incompletely filled gaps in the cavities between the filler particles (1 to 12), the reaction-curable polymer particles (24) forming bridges (26) between individual points or surface parts of adjacent filler particles (1 to 12).

2. Process according to Claim 1, characterised in that the reaction-curable polymer particles (24) and the filler particles (1 to 12) are mixed in a maximum ratio by volume of about 1 : 33.

3. Process according to Claim 1, characterised in that the reaction-curable polymer particles (24) and the filler particles (1 to 12) are mixed in a maximum ratio by volume of about 1 : 66.

4. Process according to one of Claim 1 to 3, characterised in that the cooled reaction-curable polymer particles (24) are formed with diameters which are at most about one tenth of the greatest extension of the filler particles (1 to 12).

5. Process according to one of Claim 1 to 4, characterised in that the cooled reaction-curable polymer particles (24) are coated with a layer of ice by treatment with water or water vapour.

6. Process according to one of Claims 1 to 5, characterised in that the polymer bridges (26) comprise foamed plastic.

7. Process according to one of Claims 1 to 6, characterised in that the polymer bridges (26) comprise multicomponent reaction-curable polymers.

8. Process according to one of Claims 1 to 7, characterised in that the filler particles (1 to 12) are bonded to an armouring via polymer bridges.

9. Process according to one of Claims 1 to 8, characterised in that at least some of the filler particles (1 to 12) are fibres.

10. Process according to one of Claims 1 to 9, characterised in that the filler particles (1 to 12) are bonded to an adjacent structure, for example a wall of a building or a road surface, via polymer bridges (26).

11. Process according to one of Claims 1 to 10, characterised in that at least some of the filler particles (1 to 12) are seeds and/or plant nutrients.

12. Process according to one of Claims 1 to 11, characterised in that the mixture of reaction-curable polymer particles (24) and filler particles (1 to 12) is subjected to pressure during the final reaction phase.

13. Process according to Claim 1, characterised in that the reactive reaction-curable polymer particles (24) are granulated or powdered by a cold shock using a low-temperature liquid gas.

14. Process according to Claim 1, characterised in that cooled, granular reaction-curable polymer particles (24) or reaction-curable polymer particle mixtures are mixed with reaction-curable polymers which cannot be admixed in the liquid state.


## Revendications

1. Procédé de fabrication d'un produit tel qu'un corps ou une couche composée d'au moins une matière synthétique de réaction (24) et d'au moins une charge (1-12), caractérisé en ce que :
— on forme de petites particules de matière synthétique de réaction, (24), réactive, et les mettant à une température inférieure à leur température de réaction,
— on mélange les particules de matière synthétique de réaction (24) avec les particules d'au moins une charge (1-12), le volume des différentes particules de matière synthétique de réaction (24) correspondant au maximum à un vingtième du volume des différentes particules de matière de charge (1-20) et l'ensemble du volume des particules de matière synthétique de réaction (24) correspond à 1-5% du volume total des particules de charge (1-12),

— on chauffe les particules de matière synthétique de réaction (24) à au moins la température de réaction pour former un produit à intervalles non remplis dans les cavités entre les particules de matière de charge (1-12), les particules de matière synthétique de réaction (24) formant des ponts (26) entre les différents produits ou les parties de surface des particules de charge qui se touchent (1-12).

2. Procédé selon la revendication 1, caractérisé en ce qu'on mélange les particules de matière synthétique de réaction (24) et les particules de charge (1-12) suivant le rapport volumique au plus égal à 1/33.

3. Procédé selon la revendication 1, caractérisé en ce qu'on mélange les particules de matière synthétique de réaction (24) et les particules de charge (1-12) selon un rapport de volume au plus égal à 1/66.

4. Procédé selon l'une des revendications 1 à 3, caractérisé en ce qu'on fabrique des particules de matière synthétique de réaction (24), refroidies avec un diamètre qui correspond au maximum à environ un dizième de la plus grande dimension des particules de charge (1-12).

5. Procédé selon l'une des revendications 1 à 4, caractérisé en ce qu'on revêt les particules de matière synthétique de réaction (24), refroidies, d'une couche de glace en les traitant avec de l'eau ou de la vapeur d'eau.

6. Procédé selon l'une des revendications 1 à 5, caractérisé en ce que les ponts de matière synthétique (26) sont de la matière synthétique expansée.

7. Procédé selon l'une des revendications 1 à 6, caractérisé en ce que les ponts de matière synthétique (26) sont des produits de réaction à plusieurs composants.

8. Procédé selon l'une des revendications 1 à 7, caractérisé en ce que les particules de charge (1-12) sont reliées à une armature par des ponts de matière synthétique (26).

9. Procédé selon l'une des revendications 1 à 8, caractérisé en ce que les particules de charge (1-12) sont au moins partiellement constituées par des fibres.

10. Procédé selon l'une des revendications 1 à 9, caractérisé en ce que les particules de charge (1-12) sont reliées par des ponts de matière synthétique (26) aux corps adjacents par exemple un mur ou une surface de route.

11. Procédé selon l'une des revendications 1 à 10, caractérisé en ce que les particules de charge (1-12) sont au moins constituées en partie par des grains de semence et/ou des grains d'amendement pour les plantes.

12. Procédé selon l'une des revendications 1 à 11, caractérisé en ce que le mélange de particules de matière synthétique de réaction (24) et de particules de charge (1 à 12) est mis en compression pendant la réaction.

13. Procédé selon la revendication 1, caractérisé en ce que les particules de matière synthétique de réaction (24), réactive, sont mises en granulés ou pulvérisées par un choc thermique à l'aide d'un gaz liquéfié à basse température.

14. Procédé selon la revendication 1, caractérisé en ce que les particules de produit de réaction (24), refroidies, en grains ou les mélanges de particules de matière synthétique de réaction sont mélangés à des produits de réaction qui ne se mélangent pas à l'état liquide.

# Fig. 1

# Fig. 2

# Fig. 3

Fig. 4